# FASCICULE DE BREVET EUROPEEN

(11) **EP 4 225 600 B1**
(45) Date de publication et mention de la délivrance du brevet: **31.12.2025**
(21) Numéro de dépôt: 21783268.2
(22) Date de dépôt: 27.09.2021
(51) Int. Cl.: B60K 11/08, F01P 7/10

(54) **DISPOSITIF D'OBTURATION DE FLUX D'AIR DE FACE AVANT DE VÉHICULE AUTOMOBILE COMPORTANT PLUSIEURS CADRES SUPPORTS**
VORRICHTUNG ZUM ABSPERREN EINES LUFTSTROMS FÜR EINE KRAFTFAHRZEUGFRONT MIT MEHREREN STÜTZRAHMEN
DEVICE FOR SHUTTING OFF AN AIR FLOW FOR A MOTOR VEHICLE FRONT END, COMPRISING A PLURALITY OF SUPPORT FRAMES

(30) Priorité: 07.10.2020 FR 2010226
(43) Date de publication de la demande: 16.08.2023
(73) Titulaire: VALEO SYSTEMES THERMIQUES, 78320 Le Mesnil Saint-Denis (FR)
(72) Inventeur: KUMAR, Vijendra, Chennai, 600130 (IN); SZEGENY, Vladimir, 108 00 Prague (CZ); VACCA, Frederic, 78322 Le Mesnil-Saint-Denis Cedex (FR); VELASCO, Sebastien, Chennai, 600130 (IN)
(74) Mandataire: Valeo Powertrain Systems
(86) Numéro de dépôt international: PCT/EP2021/076547
(87) Numéro de publication internationale: WO 2022/073793

(56) Documents cités:
- EP-A1- 3 109 083
- EP-A1- 3 210 811
- DE-A1- 102017 219 420
- FR-A1- 3 082 881
- US-A1- 2010 243 351

## Description

La présente invention se rapporte au domaine des dispositifs d'obturation de flux d'air de face avant de véhicule automobile.

Les faces-avant de véhicules automobiles comportent généralement une ou plusieurs entrées d'air principales par lesquelles un flux d'air entre en direction du compartiment avant du véhicule automobile. Derrière ces entrées d'air, sont généralement placés des échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, un cadre support comportant un ou plusieurs volets montés pivotants et propres à prendre une multiplicité de positions angulaires différentes, comprises entre une position d'ouverture et une position d'obturation et formant ainsi un dispositif d'obturation s'apparentant à une jalousie. Ce dispositif d'obturation est parfois appelé obturateur actif de calandre, ou encore module d'entrée d'air piloté. Un tel dispositif d'obturation peut également être désigné par l'acronyme AGS (pour « Active Grille Shutter » en anglais).

Le dispositif d'obturation permet d'ajuster le débit d'air traversant les entrées d'air et arrivant aux échangeurs de chaleur. Il est ainsi possible d'optimiser l'efficacité de ces échangeurs de chaleur en fonction des besoins en faisant varier la quantité d'air qu'ils reçoivent. De plus, à grande vitesse, les volets en position d'obturation permettent de diminuer le coefficient de traînée du véhicule automobile et ainsi améliorent l'aérodynamisme dudit véhicule automobile. Le dispositif d'obturation permet donc de réduire la consommation d'énergie et la pollution lorsque le moteur n'a pas besoin d'être refroidi par l'air extérieur.

Généralement le véhicule automobile comporte deux entrées d'air principales sur sa face avant. Une entrée d'air inférieure et une entrée d'air supérieure séparées par généralement par une poutre pare-choc. Le dispositif d'obturation comporte alors généralement deux cadres supports disposés respectivement en face de chacune des entrées d'air principales. Ce type de dispositif d'obturation comporte généralement un seul et unique actionneur afin de faire pivoter les volets des deux cadres supports. Il est ainsi difficile voir impossible de piloter indépendamment les volets des différents cadres supports. De plus, généralement ces cadres supports sont indépendants l'un de l'autre ce qui peut compliquer le montage et le branchement du dispositif d'obturation au sein du véhicule automobile.

Un exemple de dispositif d'obturation pour entrée d'air de face avant de véhicule automobile comprenant un premier et un deuxième cadre support est ainsi connu du document US2010243351A1.

Un des buts de la présente invention est donc de remédier au moins partiellement aux inconvénients de l'art antérieur et de proposer un dispositif d'obturation à plusieurs cadres supports amélioré.

La présente invention concerne donc un dispositif d'obturation pour entrée d'air de face avant de véhicule automobile comprenant :
- un premier cadre support présentant quatre flancs,
- un deuxième cadre support présentant quatre flancs,
- au moins un volet disposé au sein de chacun des premier et deuxièmes cadres supports et pivotant autour d'un axe de pivotement entre une première position extrémale ouverte et une deuxième position extrémale fermée,

le premier et le deuxième cadre support étant fixés mécaniquement l'un à l'autre au niveau d'un de leurs flancs, dit flanc de fixation,
le premier et le deuxième cadre support comportant chacun au moins un dispositif d'entraînement dédié à la mise en mouvement du au moins un volet que chacun desdits premier et deuxième cadres supports comportent.

Selon l'invention, le premier et le deuxième cadre support comportent chacun deux montants latéraux, une traverse d'extrémité supérieure et une traverse d'extrémité inférieure, lesdites traverses d'extrémité reliant lesdits montants latéraux,
la traverse d'extrémité inférieure du premier cadre support étant fixée directement à la traverse d'extrémité supérieure du deuxième cadre support.

Selon l'invention, les flancs de fixation du premier et deuxième cadre support ont une forme complémentaire.

Selon un autre aspect de l'invention, les flancs de fixation des premier et deuxième cadres supports comportent un dispositif d'emboîtage comportant un organe mâle complémentaire d'un organe femelle.

Selon un autre aspect non revendiqué, l'organe mâle est au moins un bourrelet saillant s'étendant parallèlement au flanc de fixation et l'organe femelle est au moins un logement de réception dans lequel l'au moins un bourrelet saillant vient s'insérer.

Selon un autre aspect non revendiqué, l'au moins un bourrelet saillant est disposé sur le flanc de fixation du premier cadre et l'au moins un logement de réception est disposé sur le flanc de fixation du deuxième cadre.

Selon un autre aspect non revendiqué, l'au moins un bourrelet saillant est disposé sur une face avant du cadre support qui le porte et en ce que l'au moins un logement de réception est disposé sur une face arrière du cadre support qui le porte.

Selon un autre aspect de l'invention, les flancs de fixation du premier et deuxième cadre support sont fixés l'un à l'autre par un moyen de fixation s'opposant à l'arrachement par l'arrière d'un flanc de fixation par rapport à l'autre.

Selon un autre aspect non revendiqué, les flancs de fixation du premier et deuxième cadre support sont fixés l'un à l'autre au moyen de vis.

Selon un autre aspect non revendiqué, les vis sont vissées par l'arrière du dispositif d'obturation.

Selon un autre aspect non revendiqué, les volets sont reliés aux premier et deuxième cadres supports par au moins une liaison pivot comportant un logement d'insertion ouvert et disposé sur une des faces des cadres supports et destiné à recevoir l'axe de pivotement du au moins un volet,
le dispositif d'obturation comportant en outre
- une barre de maintien recouvrant l'ouverture du logement de réception et destiné à maintenir l'axe de pivotement du au moins un volet au sein dudit logement de réception, et
- au moins deux guides alignés et disposés de sorte à maintenir la barre de maintien au-dessus de l'ouverture du logement de réception, la barre de maintien étant insérée dans les aux moins deux guides par glissement depuis l'un des flancs des cadres supports.

Selon un autre aspect de l'invention, la barre de maintien est commune aux premier et deuxième cadres.

Selon un autre aspect non revendiqué, le premier et le deuxième cadre comportent chacun une barre de maintien individuelle.

Selon un autre aspect non revendiqué, au moins un des dispositifs d'entraînement comporte un actionneur disposé sur la partie inférieure d'un des montants latéraux des premier et deuxième cadres.

Selon un autre aspect non revendiqué, au moins un des dispositifs d'entraînement comporte un actionneur disposé sur la partie intermédiaire d'un des montants latéraux des premier et deuxième cadres.

Selon un autre aspect non revendiqué, au moins un des dispositifs d'entraînement comporte un actionneur disposé sur la partie supérieure d'un des montants latéraux des premier et deuxième cadres.

Selon un autre aspect non revendiqué, le premier et le deuxième cadre support sont de dimensions identiques.

Selon un autre aspect non revendiqué, le premier et le deuxième cadre support sont de dimensions différentes.

D'autres caractéristiques et avantages de la présente invention apparaîtront plus clairement à la lecture de la description suivante, fournie à titre illustratif et non limitatif, et des dessins annexés dans lesquels :
[Fig 1] La figure 1 montre une représentation schématique en perspective de la face avant d'un dispositif d'obturation,
[Fig 2] la figure 2 montre une représentation schématique en perspective de la face arrière d'un dispositif d'obturation,
[Fig 3a] la figure 3a montre une représentation schématique en vue de côté d'un dispositif d'obturation selon un premier mode de réalisation,
[Fig 3b] la figure 3b montre une représentation schématique en vue de côté d'un dispositif d'obturation selon un deuxième mode de réalisation,
[Fig 3c] la figure 3c montre une représentation schématique en vue de côté d'un dispositif d'obturation selon un troisième mode de réalisation,
[Fig 4] la figure 4 montre une représentation schématique en perspective et en coupe de la liaison entre deux cadres supports,
[Fig 5] la figure 5 montre une représentation schématique éclatée en perspective et en coupe de la fixation entre deux cadres supports,
[Fig 6] la figure 6 montre une représentation schématique en perspective d'une portion supérieure de cadre support et d'un montant intermédiaire,
[Fig 7] la figure 7 montre une représentation schématique en perspective la portion supérieure de cadre support et de montant intermédiaire de la figure 6 avec des volets,
[Fig 8] la figure 8 montre une représentation schématique en perspective la portion supérieure de cadre support et de montant intermédiaire avec des volets de la figure 7 avec une barre de maintien,
[Fig 9] la figure 9 montre une représentation schématique en perspective d'une portion de cadre support et d'un montant intermédiaire avec guides,
[Fig 10] la figure 10 montre une représentation schématique en perspective de la portion de cadre support et du montant intermédiaire avec guides de la figure 9 avec une barre de maintien,
[Fig 11] la figure 11 montre une représentation schématique en perspective d'une barre de maintien.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément inter-changer de telles dénominations sans sortir du cadre de la présente description. Cette indexation n'implique pas non plus un ordre dans le temps par exemple pour apprécier tel ou tel critère.

Dans la description suivante, on entend par « supérieur » et « inférieur », la disposition des éléments sur le dispositif d'obturation d'entrée d'air de face avant à l'état monté du dispositif d'obturation sur le véhicule automobile.

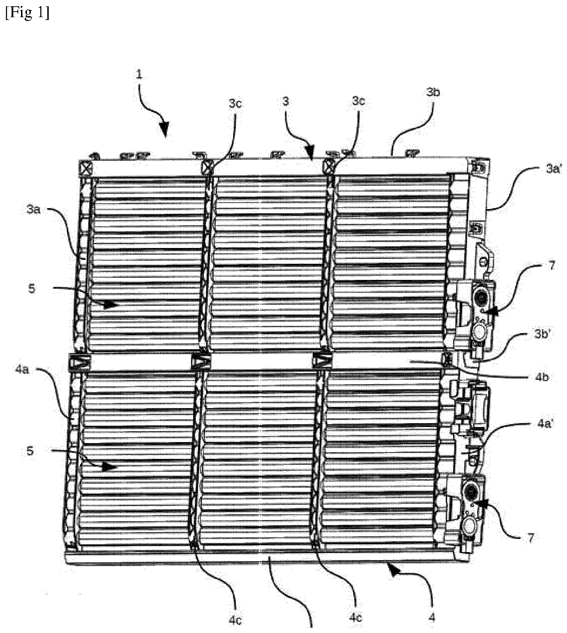

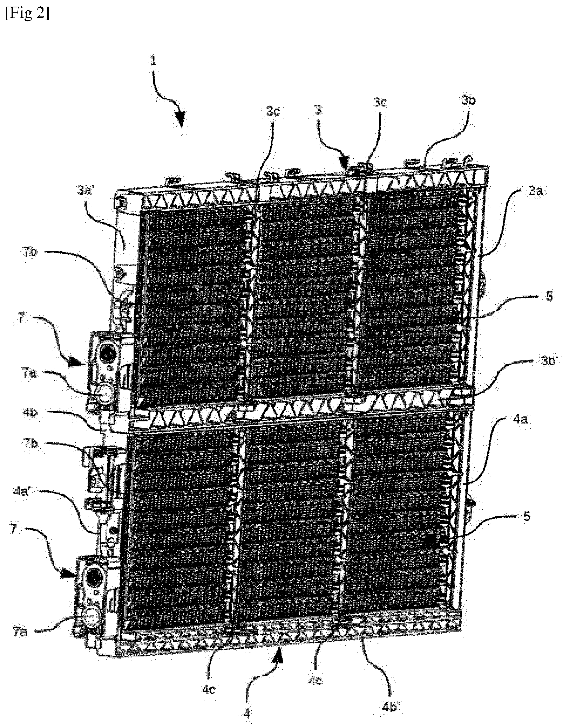

Les figures 1 et 2 montrent un dispositif d'obturation 1 pour entrée d'air de face avant de véhicule automobile respectivement de sa face avant et de sa face arrière. Par face avant, on entend ici la face du dispositif d'obturation 1 destinée à être orientée vers l'avant du véhicule automobile. Par face arrière, on entend ici la face du dispositif d'obturation 1 opposée à la face avant et destinée à être orientée vers l'arrière du véhicule automobile.

Le dispositif d'obturation 1 comprend un premier cadre support 3 présentant quatre flancs 3a, 3a', 3b, 3b'. Ces flancs 3a, 3a', 3b, 3b'peuvent notamment comporter deux montants latéraux 3a, 3a' et deux traverses d'extrémité 3b, 3b' reliant les deux montants latéraux 3a, 3a' entre eux, définissant ainsi une ouverture du premier cadre support 3. Le premier cadre support 3 a alors une forme générale rectangulaire. Plus particulièrement, le premier cadre support 3 présente une traverse d'extrémité supérieure 3b et une traverse d'extrémité inférieure 3b', ces orientations correspondant arbitrairement à la disposition du dispositif d'obturation 1 à l'état monté dans le véhicule automobile. La traverse d'extrémité supérieure 3b sera alors disposée en regard du haut du véhicule automobile et la traverse d'extrémité inférieure 3b' sera, quant à, elle disposée en regard du bas du véhicule automobile.

Le premier cadre support 3 peut également comporter au moins un montant intermédiaire 3c parallèle aux montants latéraux 3a, 3a' et reliant les traverses d'extrémité 3b, 3b'. Ce montant intermédiaire 3c relie plus particulièrement la traverse d'extrémité supérieure 3b à la traverse d'extrémité inférieure 3b' au sein de l'ouverture du premier cadre support 3. Dans l'exemple présenté aux figures 1 et 2, l'ouverture du premier cadre support 3 est divisée en trois par deux montants intermédiaires 3c.

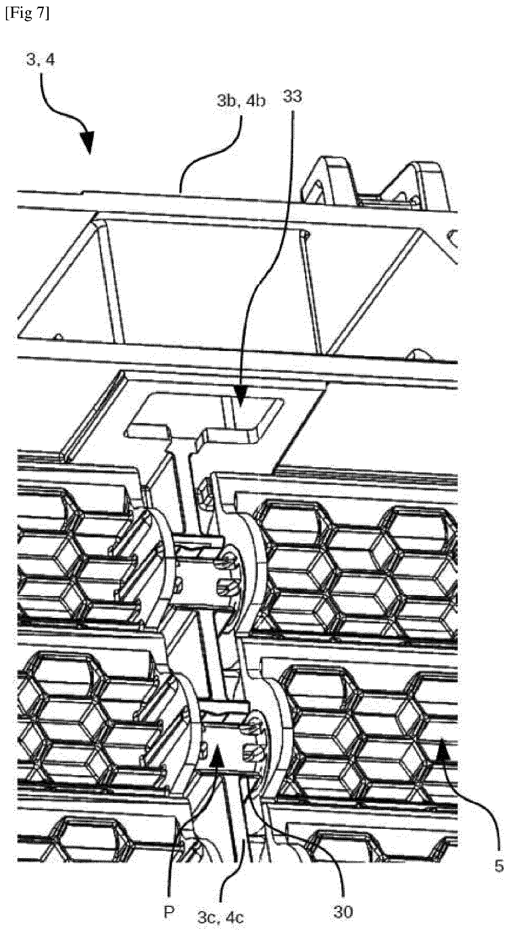

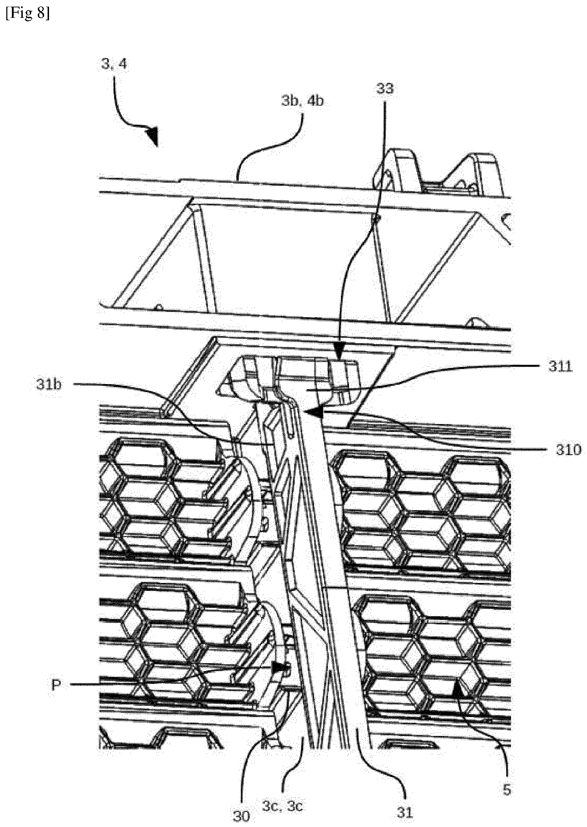

Le premier cadre support 3 présente au moins un volet 5 disposé à l'intérieur de l'ouverture. Le ou les volets 5 sont montés pivotant autour d'un axe de pivotement P (visible sur les figures 7 et 8) entre une première position extrémale ouverte (non représentée) et une deuxième position extrémale fermée (visible sur les figures 1 et 2). Lorsque le ou les volets 5 occupent leur première position extrémale ouverte, le flux d'air peut passer au travers de l'ouverture du premier cadre support 3. Lorsque le ou les volets 5 occupent leur deuxième position extrémale fermée, le ou les volets 5 obstruent l'ouverture du premier cadre support 3 et s'oppose au passage du flux d'air.

Toujours dans l'exemple illustré aux figures 1 et 2, le premier cadre support 3 comporte une pluralité de volets 5 formant au moins un ensemble de volets 5 disposés parallèlement les uns aux autres sur un même plan et qui sont adjacents. Dans le cas présent, le premier cadre support 3 comporte un unique ensemble de volets 5 disposé dans l'ouverture du premier cadre support 3. Les volets 5 sont notamment disposés horizontalement et les uns au-dessus des autres, parallèlement aux traverses d'extrémité 3b, 3b'. Les volets 5 forment alors une liaison pivot avec les montants latéraux 3a, 3a'. Les montants intermédiaires 3c ont ici un rôle de soutien afin que les volets 5 restent droits et ne ploient pas sous leur propre poids. Les volets 5 forment ainsi également une liaison pivot avec ces montants intermédiaires 3c.

Le dispositif d'obturation 1 comprend également un deuxième cadre support 4 présentant quatre flancs 4a, 4a', 4b, 4b'. Ces flancs 4a, 4a', 4b, 4b'peuvent notamment comporter deux montants latéraux 4a, 4a' et deux traverses d'extrémité 4b, 4b' reliant les deux montants latéraux 4a, 4a' entre eux, définissant ainsi une ouverture du deuxième cadre support 4. Le deuxième cadre support 4 a alors une forme générale rectangulaire. Plus particulièrement, le deuxième cadre support 4 présente une traverse d'extrémité supérieure 4b et une traverse d'extrémité inférieure 4b', ces orientations correspondant arbitrairement à la disposition du dispositif d'obturation 1 à l'état monté dans le véhicule automobile. La traverse d'extrémité supérieure 4b sera alors disposée en regard du haut du véhicule automobile et la traverse d'extrémité inférieure 4b' sera, quant à, elle disposée en regard du bas du véhicule automobile.

Le deuxième cadre support 4 peut également comporter au moins un montant intermédiaire 4c parallèle aux montants latéraux 4a, 4a' et reliant les traverses d'extrémité 4b, 4b'. Ce montant intermédiaire 4c relie plus particulièrement la traverse d'extrémité supérieure 4b à la traverse d'extrémité inférieure 4b' au sein de l'ouverture du deuxième cadre support 4. Dans l'exemple présenté aux figures 1 et 2, l'ouverture du deuxième cadre support 4 est divisée en trois par deux montants intermédiaires 4c.

Le deuxième cadre support 4 présente au moins un volet 5 disposé à l'intérieur de l'ouverture. Le ou les volets 5 sont montés pivotant autour d'un axe de pivotement P (visible sur les figures 7 et 8) entre une première position extrémale ouverte (non représentée) et une deuxième position extrémale fermée (visible sur les figures 1 et 2). Lorsque le ou les volets 5 occupent leur première position extrémale ouverte, le flux d'air peut passer au travers de l'ouverture du premier cadre support 3. Lorsque le ou les volets 5 occupent leur deuxième position extrémale fermée, le ou les volets 5 obstruent l'ouverture du premier cadre support 3 et s'oppose au passage du flux d'air.

Toujours dans l'exemple illustré aux figures 1 et 2, le deuxième cadre support 4 comporte une pluralité de volets 5 formant au moins un ensemble de volets 5 disposés parallèlement les uns aux autres sur un même plan et qui sont adjacents. Dans le cas présent, le deuxième cadre support 4 comporte un unique ensemble de volets 5 disposé dans l'ouverture du deuxième cadre support 4. Les volets 5 sont notamment disposés horizontalement et les uns au-dessus des autres, parallèlement aux traverses d'extrémité 4b, 4b'. Les volets 5 forment alors une liaison pivot avec les montants latéraux 4a, 4a'. Les montants intermédiaires 4c ont ici un rôle de soutien afin que les volets 5 restent droits et ne ploient pas sous leur propre poids. Les volets 5 forment ainsi également une liaison pivot avec ces montants intermédiaires 3c.

De plus, le premier 3 et le deuxième 4 cadre support comportent chacun au moins un dispositif d'entraînement 7 dédié à la mise en mouvement du ou des volets 5 que chacun desdits premier 3 et deuxième 4 cadres supports comportent. Ces dispositifs d'entraînement 7 (visible sur les figures 1 et 2) sont configurés pour piloter le positionnement, et donc le pivotement, du ou des volets 5 entre leur première position extrémale ouverte et leur deuxième position extrémale fermée.

Le dispositif d'entraînement 7 comporte notamment un actionneur 7a, par exemple un moteur électrique, et un organe de commande 7b (visibles à la figure 2). Dans l'exemple illustré aux figures 1 et 2, l'actionneur 7a est relié directement à un organe de commande 7b, par exemple une bielle, par un levier (non visible), l'organe de commande 7b est quant à lui relié également à chaque volet 5. Une rotation de l'actionneur 7a fait alors translater l'organe de commande 7b afin de faire pivoter simultanément le ou les volets 5. D'autres modes de transmission des mouvements de rotation de l'actionneur 7a à l'ensemble de volets 5 peuvent tout à fait être imaginés.

Toujours dans l'exemple illustré aux figures 1 et 2, le dispositif d'entraînement 7 est disposé sur un des montants latéraux 3a, 3a', 4a, 4a' des premier 3 et deuxième 4 cadres supports 4 afin de pouvoir entraîner en pivotement le ou les volets 5 simultanément.

Le fait d'utiliser des dispositifs d'entraînement 7 dédiés pour chaque cadre support 3 et 4, permet de piloter individuellement le ou les volets de chaque cadre support 3 et 4. Cela peut être particulièrement avantageux afin de limiter le flux d'air traversant le dispositif d'obturation 1, par exemple, lors d'un déplacement du véhicule. Cela permet ainsi potentiellement d'améliorer le coefficient aérodynamique et donc la consommation du véhicule tout en permettant à un flux d'air de traverser l'un des cadres supports 3 ou 4 pour atteindre les échangeurs de chaleurs disposés en aval du dispositif d'obturation 1.

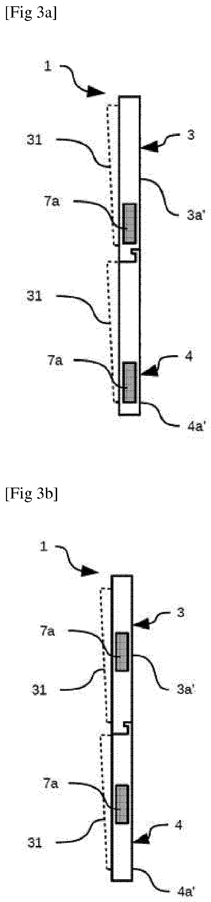

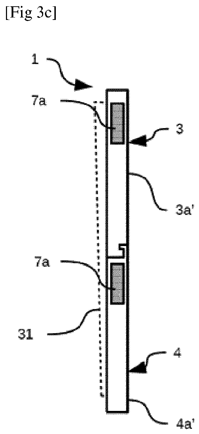

Comme le montrent les figures 3a, 3b et 3c, les dispositifs d'entraînement 7 et plus précisément leurs actionneurs 7a, peuvent être disposés à des niveaux différents sur les montants latéraux 3a, 3a', 4a, 4a' selon les besoins, notamment selon les contraintes de place au sein du véhicule automobile.

Dans la figure 3a, les dispositifs d'entraînement 7 comportent chacun un actionneur 7a disposé sur la partie inférieure d'un des montants latéraux 3a, 3a', 4a, 4a' des premier 3 et deuxième 4 cadres. Par partie inférieure, on entend ici la partie du montant latéral 3a, 3a', 4a, 4a' la plus proche de la traverse d'extrémité inférieure 3b', 4b'.

Dans la figure 3b, les dispositifs d'entraînement 7 comportent chacun un actionneur 7a disposé sur la partie intermédiaire d'un des montants latéraux 3a, 3a', 4a, 4a' des premier 3 et deuxième 4 cadres. Par partie intermédiaire, on entend ici la partie du montant latéral 3a, 3a', 4a, 4a' située entre la traverse d'extrémité supérieure 3b, 4b et la traverse d'extrémité inférieure 3b', 4b'.

Dans la figure 3c, les dispositifs d'entraînement 7 comportent chacun un actionneur 7a disposé sur la partie supérieure d'un des montants latéraux 3a, 3a', 4a, 4a' des premier 3 et deuxième 4 cadres. Par partie supérieure, on entend ici la partie du montant latéral 3a, 3a', 4a, 4a' la plus proche de la traverse d'extrémité supérieure 3b, 4b.

Sur les figures 3a, 3b et 3c, les actionneurs 7a des dispositifs d'entraînement 7 de chaque cadre support 3, 4 sont sur des parties similaires d'un montant latéral 3a, 3a', 4a, 4a'. Cependant, il est tout à fait possible d'imaginer un mode de réalisation dans lequel les actionneurs 7a de chaque cadre support 3, 4 soient sur des parties distinctes d'un montant latéral 3a, 3a', 4a, 4a'.

Comme le montrent les figures 1 et 2, le premier 3 et le deuxième 4 cadre support sont fixés directement l'un à l'autre au niveau d'un de leurs flancs 3a, 3a', 3b, 3b' et 4a, 4a', 4b, 4b', dit flanc de fixation. Cette fixation directe des cadres supports 3 et 4 l'un à l'autre permet une mise en place simplifiée du dispositif d'obturation 1 au sein du véhicule automobile. L'utilisation de deux cadres support 3 et 4 fixés directement l'un à l'autre est également particulièrement intéressant pour des dispositifs d'obturation 1 de grande taille, par exemple pour des véhicules tels que des camions. En effet, une telle conformation permet de limiter les risques de déformation ou de casse des volets 5 du fait de la grande taille du dispositif d'obturation 1 et de la pression de l'air. De plus, le fait que chaque cadre support 3, 4 comporte un dispositif d'entraînement 7 dédié permet de simplifier les branchements et connexions lors de cette mise en place.

Le premier 3 et le deuxième 4 cadres support sont de préférence fixés l'un au-dessus de l'autre. Par-là, on entend que la traverse d'extrémité inférieure 3b' du premier cadre support 3 est fixée directement à la traverse d'extrémité supérieure 4b du deuxième cadre support 4. Cela permet notamment de placer chaque cadre support 3 et 4 respectivement en regard d'une entrée d'air inférieure et une entrée d'air supérieure de la face avant du véhicule automobile.

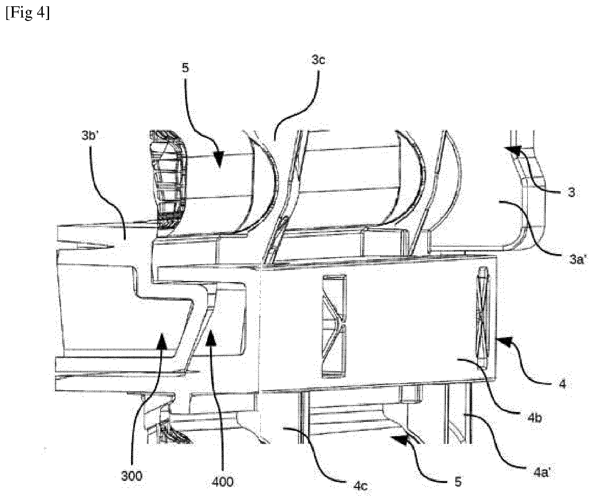

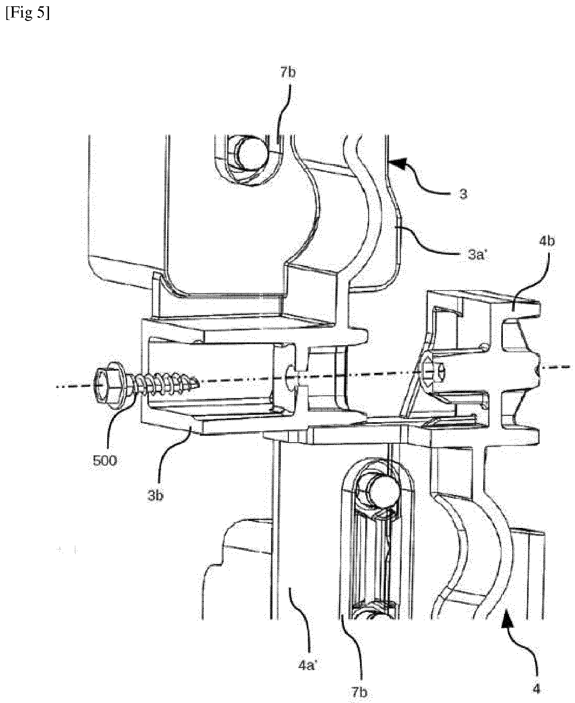

Les figures 4 et 5 montrent plus en détails la fixation entre les deux cadres supports 3 et 4. Plus particulièrement, sur ces figures 4 et 5, il s'agit de la fixation entre la traverse d'extrémité inférieure 3b' du premier cadre support 3 et la traverse d'extrémité supérieure 4b du deuxième cadre support 4.

Comme le montre la figure 4, les flancs de fixation 3a, 3a', 3b, 3b' et 4a, 4a', 4b, 4b' du premier 3 et deuxième 4 cadre support ont une forme complémentaire. Plus précisément ici les flancs de fixation sont la traverse d'extrémité inférieure 3b' du premier cadre support 3 et la traverse d'extrémité supérieure 4b du deuxième cadre support 4. Cette complémentarité de forme permet notamment que les cadres 3, 4 soient bien ajustés l'un par rapport à l'autre et permet également une mise en place aisée.

Plus précisément, les flancs de fixation 3a, 3a', 3b, 3b' et 4a, 4a', 4b, 4b' des premier 3 et deuxième 4 cadres supports comportent un dispositif d'emboîtage comportant un organe mâle 300 complémentaire d'un organe femelle 400. Dans l'exemple présenté, l'organe mâle 300 est au moins un bourrelet saillant 300 s'étendant parallèlement audit flanc de fixation 3a, 3a', 3b, 3b' et 4a, 4a', 4b, 4b'. Ce, au moins un bourrelet saillant 300 est ici disposé sur le flanc de fixation 3a, 3a', 3b, 3b' du premier cadre 3, c'est-à-dire sa traverse d'extrémité inférieure 3b'. Toujours dans l'exemple présenté, l'organe femelle 400 est au moins un logement de réception 400 dans lequel l'au moins un bourrelet saillant 300 vient s'insérer. Ce, au moins un logement de réception 400 est ici disposé sur le flanc de fixation 4a, 4a', 4b, 4b' du deuxième cadre 4, c'est-à-dire sa traverse d'extrémité supérieure 4b.

Afin de mieux résister aux contraintes notamment aérodynamiques en roulage, l'au moins un bourrelet saillant 300 est de préférence disposé sur une face avant du cadre support 3, 4 qui le porte et l'au moins un logement de réception 400 est quant à lui disposé sur une face arrière du cadre support 3, 4 qui le porte.

Comme le montre la figure 5, les flancs de fixation 3a, 3a', 3b, 3b' et 4a, 4a', 4b, 4b' du premier 3 et deuxième 4 cadre support sont fixés l'un à l'autre par un moyen de fixation s'opposant à l'arrachement par l'arrière d'un flanc de fixation 3a, 3a', 3b, 3b' et 4a, 4a', 4b, 4b' par rapport à l'autre. Plus précisément, ce moyen de fixation peut être des vis 500 réparties le long des flancs de fixation 3a, 3a', 3b, 3b' et 4a, 4a', 4b, 4b'. De préférence et afin de protéger ces vis 500, ces dernières sont visées par l'arrière du dispositif d'obturation 1.

Les cadres support 3 et 4 peuvent notamment avoir des dimensions identiques à celle du premier cadre support 3, comme illustré sur les figures 1 et 2. Par là, on entend que les traverses d'extrémité inférieure 3b', 4b' et supérieure 3b, 4b des premier 3 et deuxième 4 cadres support sont de même taille et que les montants latéraux 3a, 3a', 4a, 4a' des premier 3 et deuxième 4 cadres support sont également de même tailles.

Il est cependant tout à fait possible d'imaginer que les deux cadres support 3 et 4 soient de dimensions différentes. Il est ainsi possible que les cadres support 3 et 4 aient des flancs de fixation 3a, 3a', 3b, 3b' et 4a, 4a', 4b, 4b' de même taille mais d'autres flancs 3a, 3a', 3b, 3b' et 4a, 4a', 4b, 4b' de dimension différentes. Par exemple, les cadres support 3 et 4 peuvent avoir une largeur identique mais des hauteurs différentes. Les traverses d'extrémité inférieure 3b', 4b' et supérieure 3b, 4b des premier 3 et deuxième 4 cadres support peuvent ainsi être de même taille et les montants latéraux 3a, 3a', du premier cadre support 3 peuvent être d'une taille différente des montants latéraux 4a, 4a' du deuxième cadre support 4.

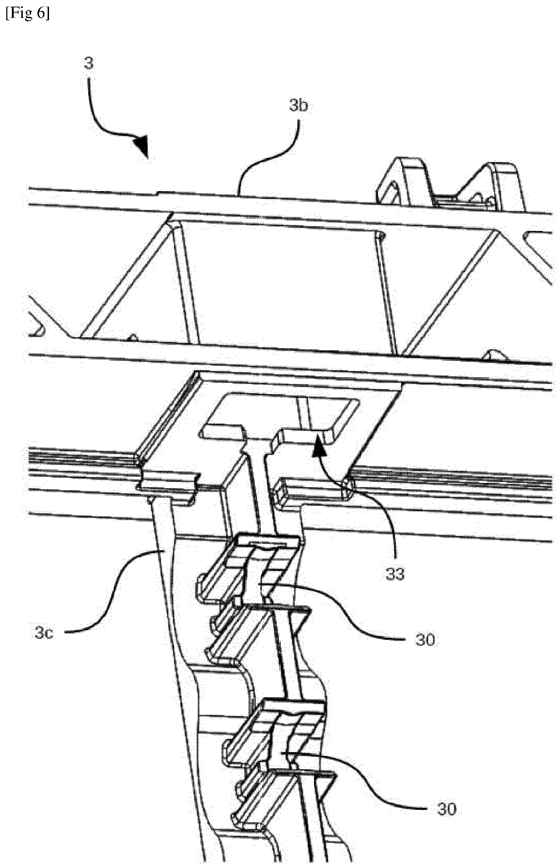

Les figures 6 à 8 montrent plus en détail la liaison pivot entre le ou les volets 5 et un cadre support 3 ou 4. Dans l'exemple illustré, il s'agit de liaisons pivots entre des volets 5 et un montant intermédiaire 3c. Cependant, comme dit plus haut, cette liaison pivot peut être également présente avec un des flancs 3a, 3a', 3b, 3b' et 4a, 4a', 4b, 4b' des cadres supports 3, 4 selon la configuration et le positionnement du ou des volets 5.

L'au moins une liaison pivot comporte ainsi un logement d'insertion 30 ouvert et disposé sur une des faces des cadres supports 3, 4 et destiné à recevoir l'axe de pivotement P du ou des volets 5. Comme le montrent les figures 6 et 7, ce logement de réception 30 est ici disposé sur un montant intermédiaire 3c lorsque le ou les volets 5 sont disposés parallèlement aux traverses d'extrémités 3b, 3b', 4b, 4b'. Un tel logement de réception 30 peut néanmoins également être présent au niveau d'un ou des deux montants latéraux 3a, 3a', 4a, 4a' pour assurer la liaison pivot avec le ou les volets 5.

Le logement de réception 30 est de préférence disposé sur la face arrière des cadres supports 3, 4 de sorte que son ouverture soit orientée vers l'arrière du véhicule automobile à l'état monté. Cela permet de protéger cette liaison pivot d'éventuels débris ou poussières qui pourraient se loger au sein du logement de réception et gripper la liaison pivot et donc bloquer potentiellement la rotation du ou des volets 5.

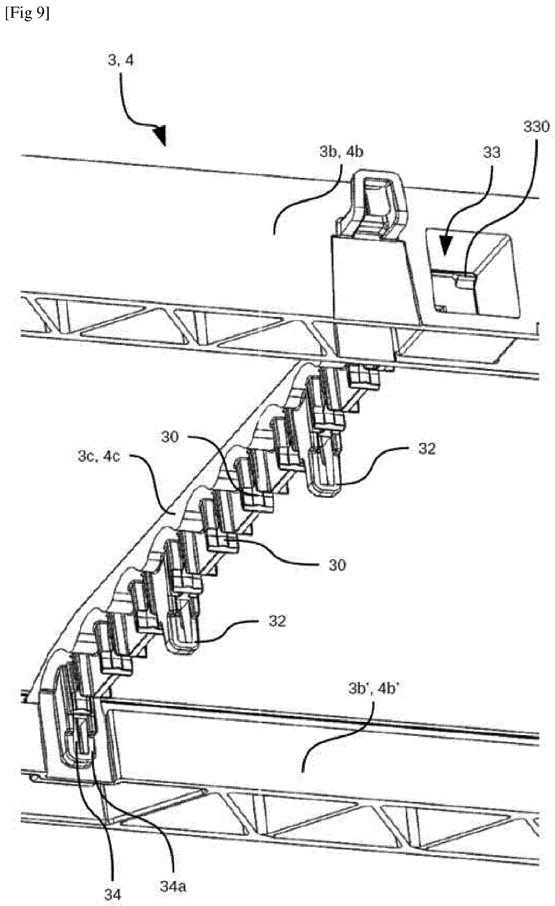

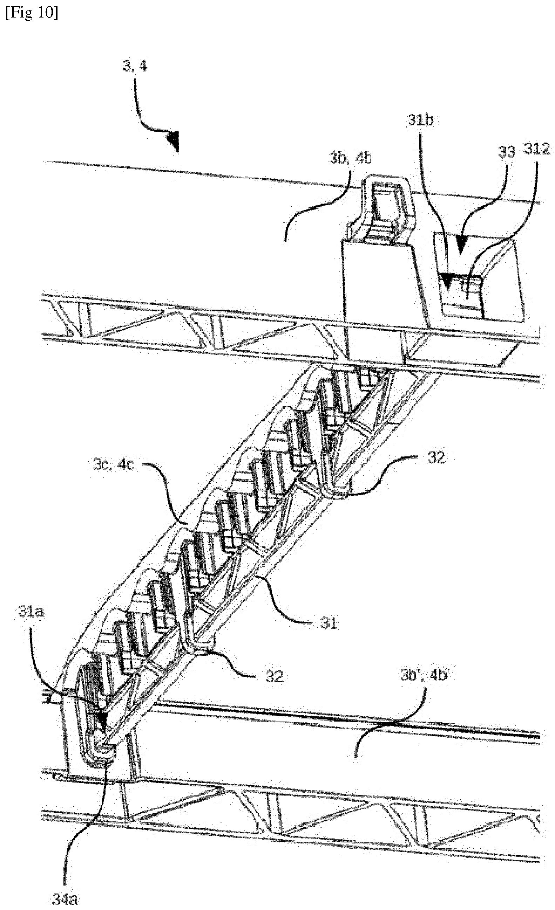

Afin de maintenir l'axe de pivotement P du volet 5 au sein du logement de réception 30, le dispositif d'obturation 1 comporte en outre une barre de maintien 31 recouvrant l'ouverture du logement de réception 30, comme illustré à la figure 8. Cette barre de maintien 31 est maintenue au-dessus de l'ouverture du logement de réception 30 par au moins deux guides 32 dans lesquels ladite barre de maintien 31 est insérée, comme illustré aux figures 9 et 10. Ces guides 32 maintiennent la barre de maintien 31 au-dessus de l'ouverture du logement de réception 30 de sorte que le seul degré de liberté de ladite barre de maintien 31 est un glissement le long de l'axe défini par l'alignement des guides 32. Ces guides 32 peuvent plus particulièrement former une arche à l'intérieure de laquelle est destinée à s'insérer la barre de maintien 31 L'alignement des guides 32 suit de préférence l'alignement des logements de réception 30 est donc parallèle à un flanc 3a, 3a', 3b, 3b', 4a, 4a', 4b, 4b' et/ou montant intermédiaire 3c, 4c sur lequel sont disposés les logements de réception 30. De même que pour le ou les logements de réception 30, les guides 32 sont de préférence réalisés sur la face arrière des cadres supports 3, 4.

Les guides 32 ont de préférence une hauteur définie de sorte que la barre de maintien 31 plaque et maintient l'axe de pivotement P au fond du logement de réception 30. Par hauteur de guide 32, on entend ici plus particulièrement la longueur de l'ouverture par laquelle passe la barre de maintien 31 entre un logement de réception 30 et l'extrémité saillante du guide 32.

Le fait d'utiliser des guides 32 et une barre de maintien 31 permet à la liaison pivot d'être aisément réalisée lors de la fabrication du dispositif d'obturation. En effet, un opérateur n'a après placement des axes de pivotements P dans les logements de réception 30, qu'une seule opération d'insertion de la barre de maintien 31 dans les guides 32 pour former la liaison pivot. De plus, ce type de fixation des volets 5 est particulièrement utile et intéressant pour des dispositifs d'obturation 1 de grande taille, par exemple pour des véhicules tels que des camions.

Dans l'exemple illustré, les guides 32 sont disposés sur un montant intermédiaire 3c, 4c, néanmoins, comme décrit précédemment, la liaison pivot peut également être présente au niveau d'un ou des montants latéraux 3a, 3a', 4a, 4a'. Il en est donc de même pour les guides 32 qui peuvent être disposés également sur au moins un des montants latéraux 3a, 3a', 4a, 4a' lorsque le ou les volets 5 sont disposés parallèlement aux traverses d'extrémités 3b, 3b', 4b, 4b'.

Afin de faciliter la fabrication des cadres supports 3, 4 et des guides 32, ces derniers peuvent plus particulièrement venir de matière avec lesdits cadres supports 3, 4. Les cadres supports 3, 4 et les guides 32 peuvent ainsi être par exemple réalisés en matière plastique ou composite et réalisés simultanément lors d'une étape de moulage ou de surmoulage.

La barre de maintien 31 peut plus particulièrement être insérée dans les guides 32 par glissement depuis l'un des flancs 3a, 3a', 3b, 3b', 4a, 4a', 4b, 4b' des cadres supports 3, 4. On parle alors d'un flanc d'insertion 3a, 3a', 3b, 3b', 4a, 4a', 4b, 4b'. Dans l'exemple illustré, ce flanc d'insertion 3a, 3a', 3b, 3b', 4a, 4a', 4b, 4b' est la traverse d'extrémités supérieure 3b, 4b. Pour laisser passer la barre de maintien 31, le flanc d'insertion 3a, 3a', 3b, 3b', 4a, 4a', 4b, 4b' peut notamment comporter une ouverture d'insertion 33, visible sur les figures 6 à 10.

Afin de bloquer le mouvement de glissement de la barre de maintien 31, le flanc 3a, 3a', 3b, 3b', 4a, 4a', 4b, 4b' opposé au flanc d'insertion 3a, 3a', 3b, 3b', 4a, 4a', 4b, 4b', ici la traverse d'extrémité inférieure 3b', 4b', peut notamment comporter une paroi de butée 34 sur laquelle est destinée à reposer une première extrémité 31a de la barre de maintien 31, comme illustré aux figures 9 et 10. Plus précisément, le flanc opposé 3a, 3a', 3b, 3b', 4a, 4a', 4b, 4b' au flanc d'insertion 3a, 3a', 3b, 3b', 4a, 4a', 4b, 4b' de la barre de maintien 31 peut comporter un logement 34a au sein duquel est destiné à venir s'insérer la première extrémité 31a de la barre de maintien 31. Le fond du logement 34a forme alors la paroi de butée 34. La présence d'un tel logement 34a permet de bloquer et de maintenir en place la première extrémité 31a de la barre de maintien 31.

Selon un premier mode de réalisation notamment illustré aux figures 3a et 3b, le premier 3 et le deuxième 4 cadre comportent chacun une barre de maintien 31 individuelle. Plus précisément, selon ce premier mode de réalisation, le flanc 3a, 3a', 3b, 3b', 4a, 4a', 4b, 4b' opposé au flanc d'insertion 3a, 3a', 3b, 3b', 4a, 4a', 4b, 4b' de chaque cadre support 3, 4, ici les traverses d'extrémité inférieure 3b' et 4b', comportent une paroi de butée 34 sur laquelle est destinée à reposer la première extrémité 31a de la barre de maintien 31 individuelle à chaque cadre support 3, 4.

Selon un deuxième mode de réalisation notamment illustré à la figure 3c, la barre de maintien 31 est commune aux premier 3 et deuxième 4 cadres. Cette barre de maintien 31 commune permet également de renforcer la fixation et l'alignement des cadres supports 3, 4 entre eux. Plus précisément, selon ce deuxième mode de réalisation, les flancs de fixation 3a, 3a', 3b, 3b', 4a, 4a', 4b, 4b' par lesquels le premier 3 et le deuxième 4 cadre sont fixés l'un à l'autre sont traversés par la barre de maintien 31 commune. La barre de maintien 31 commune est alors insérée par exemple au niveau du flanc d'insertion 3a, 3a', 3b, 3b' du premier cadre support 3, ici sa traverse d'extrémité supérieure 3b, passe au travers des flancs de fixations 3a, 3a', 3b, 3b', 4a, 4a', 4b, 4b', ici la traverse d'extrémité inférieure 3b' du premier cadre support 3 et la traverse d'extrémité supérieure 4b du deuxième cadre support 4. La barre de maintien 31 commune vient en butée sur le flanc 4a, 4a', 4b, 4b' opposé au flanc de fixation 4a, 4a', 4b, 4b' du deuxième cadre support 4, ici sa traverse d'extrémité inférieure 4b'.

Afin d'éviter que la barre de maintien 31 ne puisse ressortir par l'ouverture d'insertion 33, une deuxième extrémité 31b de la barre de maintien 31, opposée à la première extrémité destinée à venir reposer sur la paroi de butée 34, peut comporter une languette élastique 310 disposant d'une extrémité libre 311, comme illustré sur la figure 8. Cette extrémité libre 311 est notamment destinée à venir en appui de la face intérieure du flanc d'insertion 3a, 3a', 3b, 3b', 4a, 4a', 4b, 4b', ici de la traverse d'extrémité supérieure 3b, 4b. Par intérieure, on entend ici la face du flanc d'insertion 3a, 3a', 3b, 3b', 4a, 4a', 4b, 4b' en regard de l'intérieur du cadre support 3, 4. Par ce positionnement, la languette élastique 310 vient s'opposer à l'extraction de la barre de maintien 31 par l'ouverture d'insertion 33.

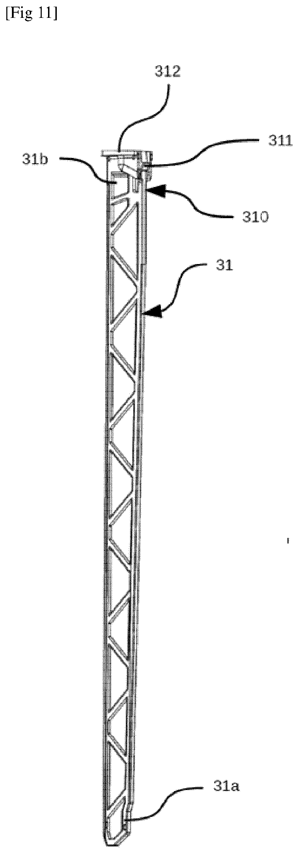

La deuxième extrémité 31b de la barre de maintien 31 peut également comporter une collerette de maintien 312, visible sur les figures 10 et 11. Cette collerette de maintien 312 peut notamment avoir une forme complémentaire de l'ouverture d'insertion 33 afin de maintenir ladite deuxième extrémité. L'ouverture d'insertion 33 peut quant à elle comporter au moins une butée 330 (visible sur la figure 9) sur laquelle est destinée à venir reposer la collerette de maintien 312.

Par ce système de fixation simple, la barre de maintien 31 est automatiquement fixée après sa mise en place sans qu'il soit nécessaire à un opérateur de réaliser une étape de fixation dédiée.

La figure 11 montre plus en détail et dans son entièreté une barre de maintien 8. Cette barre de maintien 31 peut notamment être réalisée en matériau plastique, par exemple par moulage. La barre de maintien 31 peut notamment avoir sa première extrémité 31a, destinée à être glissée en premier, ayant une largeur inférieure à sa deuxième extrémité 31b, opposée à la première extrémité 31a. Par largeur de la barre de maintien 31, on entend ici la distance entre la tranche de la barre de maintien destinée à venir en regard des logements de réception 30 et sa tranche opposée. De ce fait, la hauteur des guides 32 est adaptée à cette forme particulière de sorte que la barre de maintien 31 plaque et maintien l'axe de pivotement P au fond du logement de réception 30. Ainsi, selon l'exemple illustré aux figures 9 et 10, un guide 32 « inférieur », c'est-à-dire proche de la traverse d'extrémité inférieure 3b', 4b', aura une hauteur inférieure à la hauteur d'un guide 32 « supérieur », c'est-à-dire proche de la traverse d'extrémité supérieure 3b, 4b.

Ainsi, on voit bien que le dispositif d'obturation 1 par la présence de deux cadres supports 3, 4 fixés mécaniquement l'un à l'autre et ayant chacun un dispositif d'entraînement 7 en pivotement des volets 5 dédié, permet un montage plus aisé ainsi qu'un contrôle plus optimal des volets pour de meilleures performances aussi bien de circulation d'air vers des échangeurs de chaleurs que pour l'aérodynamisme du véhicule automobile.

## Revendications

1. Dispositif d'obturation (1) pour entrée d'air de face avant de véhicule automobile comprenant :
- un premier cadre support (3) présentant quatre flancs (3a, 3a', 3b, 3b'),
- un deuxième cadre support (4) présentant quatre flancs (4a, 4a', 4b, 4b'),
- au moins un volet (5) disposé au sein de chacun des premier (3) et deuxièmes (4) cadres supports et pivotant autour d'un axe de pivotement (P) entre une première position extrémale ouverte et une deuxième position extrémale fermée,
le premier (3) et le deuxième (4) cadre support étant fixés mécaniquement l'un à l'autre au niveau d'un de leurs flancs (3a, 3a', 3b, 3b' et 4a, 4a', 4b, 4b') dit flanc de fixation,
le premier (3) et le deuxième (4) cadre support comportant chacun au moins un dispositif d'entraînement (7) dédié à la mise en mouvement du au moins un volet (5) que chacun desdits premier (3) et deuxième (4) cadres supports comportent,
le premier (3) et le deuxième (4) cadre support comportant chacun deux montants latéraux (3a, 3a', 4a, 4a'), une traverse d'extrémité supérieure (3b, 4b) et une traverse d'extrémité inférieure (3b', 4b'), lesdites traverses d'extrémité (3b, 3b', 4b, 4b') reliant lesdits montants latéraux (3a, 3a', 4a, 4a'),
la traverse d'extrémité inférieure (3b') du premier cadre support (3) étant fixée directement à la traverse d'extrémité supérieure (4b) du deuxième cadre support (4), **caractérisé en ce que** les flancs de fixation (3a, 3a', 3b, 3b' et 4a, 4a', 4b, 4b') du premier (3) et deuxième (4) cadre support ont une forme complémentaire.

2. Dispositif d'obturation (1) selon la revendication précédente, **caractérisé en ce que** les flancs de fixation (3a, 3a', 3b, 3b' et 4a, 4a', 4b, 4b') des premier (3) et deuxième (4) cadres supports comportent un dispositif d'emboîtage comportant un organe mâle (300) complémentaire d'un organe femelle (400).

3. Dispositif d'obturation (1) selon l'une quelconque des revendications précédentes, **caractérisé en ce que** les flancs de fixation (3a, 3a', 3b, 3b' et 4a, 4a', 4b, 4b') du premier (3) et deuxième (4) cadre support sont fixés l'un à l'autre par un moyen de fixation s'opposant à l'arrachement par l'arrière d'un flanc de fixation (3a, 3a', 3b, 3b' et 4a, 4a', 4b, 4b') par rapport à l'autre.

## Patentansprüche

1. Verschlussvorrichtung (1) für einen Frontlufteinlass eines Kraftfahrzeugs, umfassend:
einen ersten Tragrahmen (3) mit vier Seiten (3a, 3a', 3b, 3b'),
einen zweiten Tragrahmen (4) mit vier Seiten (4a, 4a', 4b, 4b'), mindestens eine Klappe (5), die in jedem des ersten (3) und zweiten (4) Tragrahmens angeordnet ist und um eine Schwenkachse (P) zwischen einer ersten extremen offenen Position und einer zweiten extremen geschlossenen Position schwenkbar ist, wobei der erste (3) und der zweite (4) Tragrahmen mechanisch an einer ihrer Seiten (3a, 3a', 3b, 3b' und 4a, 4a', 4b, 4b'), als Befestigungsseite bezeichnet, aneinander befestigt sind,
wobei der erste (3) und der zweite (4) Tragrahmen jeweils mindestens eine Antriebsvorrichtung (7) umfassen, die zur Bewegung der mindestens einen Klappe (5) dient, die jeder der genannten ersten (3) und zweiten (4) Tragrahmen aufweist, wobei der erste (3) und der zweite (4) Tragrahmen jeweils zwei seitliche Pfosten (3a, 3a', 4a, 4a'), einen oberen Endquerträger (3b, 4b) und einen unteren Endquerträger (3b', 4b') umfassen, wobei die genannten Endquerträger (3b, 3b', 4b, 4b') die genannten seitlichen Pfosten (3a, 3a', 4a, 4a') verbinden, wobei der untere Endquerträger (3b') des ersten Tragrahmens (3) direkt an dem oberen Endquerträger (4b) des zweiten Tragrahmens (4) befestigt ist, **dadurch gekennzeichnet, dass** die Befestigungsseiten (3a, 3a', 3b, 3b' und 4a, 4a', 4b, 4b') des ersten (3) und zweiten (4) Tragrahmens eine komplementäre Form aufweisen.

2. Verschlussvorrichtung (1) nach dem vorhergehenden Anspruch, **dadurch gekennzeichnet, dass** die Befestigungsseiten (3a, 3a', 3b, 3b' und 4a, 4a', 4b, 4b') des ersten (3) und zweiten (4) Tragrahmens eine Einrastvorrichtung umfassen, die ein männliches Element (300) komplementär zu einem weiblichen Element (400) aufweist.

3. Verschlussvorrichtung (1) nach einem der vorhergehenden Ansprüche, **dadurch gekennzeichnet, dass** die Befestigungsseiten (3a, 3a', 3b, 3b' und 4a, 4a', 4b, 4b') des ersten (3) und zweiten (4) Tragrahmens mittels eines Befestigungsmittels aneinander befestigt sind, das ein rückwärtiges Ablösen einer Befestigungsseite (3a, 3a', 3b, 3b' und 4a, 4a', 4b, 4b') von der anderen verhindert.

## Claims

1. Shutter device (1) for a motor vehicle front air intake comprising:
a first support frame (3) having four sides (3a, 3a', 3b, 3b'),
a second support frame (4) having four sides (4a, 4a', 4b, 4b'),
at least one flap (5) arranged within each of the first (3) and second (4) support frames and pivoting about a pivot axis (P) between a first extreme open position and a second extreme closed position, the first (3) and second (4) support frames being mechanically fixed to one another at one of their sides (3a, 3a', 3b, 3b' and 4a, 4a', 4b, 4b') referred to as a fixing side, the first (3) and second (4) support frames each comprising at least one drive device (7) dedicated to moving the at least one flap (5) that each of said first (3) and second (4) support frames comprises, the first (3) and second (4) support frames each comprising two lateral uprights (3a, 3a', 4a, 4a'), an upper end cross-member (3b, 4b) and a lower end cross-member (3b', 4b'), said end cross-members (3b, 3b', 4b, 4b') connecting said lateral uprights (3a, 3a', 4a, 4a'), the lower end cross-member (3b') of the first support frame (3) being directly fixed to the upper end cross-member (4b) of the second support frame (4), **characterized in that** the fixing sides (3a, 3a', 3b, 3b' and 4a, 4a', 4b, 4b') of the first (3) and second (4) support frames have a complementary shape.

2. Shutter device (1) according to the preceding claim, **characterized in that** the fixing sides (3a, 3a', 3b, 3b' and 4a, 4a', 4b, 4b') of the first (3) and second (4) support frames comprise an interlocking device comprising a male member (300) complementary to a female member (400).

3. Shutter device (1) according to any one of the preceding claims, **characterized in that** the fixing sides (3a, 3a', 3b, 3b' and 4a, 4a', 4b, 4b') of the first (3) and second (4) support frames are fixed to one another by a fastening means preventing the rearward detachment of one fixing side (3a, 3a', 3b, 3b' and 4a, 4a', 4b, 4b') relative to the other.
